# EUROPEAN PATENT APPLICATION

(11) **EP 1 985 398 A1**
(43) Date of publication of application: **29.10.2008**
(21) Application number: 08154908.1
(22) Date of filing: 22.04.2008
(51) Int. Cl.: B23G 9/00, B23C 3/30, B23C 5/08, G02C 5/22, F16B 23/00

(54) **Method for making a screw for spectacles, and screw for spectacles thus made**

(30) Priority: 23.04.2007 IT UD20070074
(71) Applicant: Visottica Industrie S.p.A. con unico socio, 31058 Susegana (TV) (IT)
(72) Inventor: Montalban, Rinaldo, 30100, Venezia (IT)
(74) Representative: Petraz, Gilberto Luigi

(57) **Abstract**

Method for making a screw (10) for spectacles, made of metal material, having a stem (13) provided with at least a threaded segment (16), and a screwing head (15) provided with a cross-shaped notch (20) defining the seating for a screwing tool to engage. The method comprises making at least the cross-shaped notch (20) by means of mechanical working through removal of material, and provides at least the following steps: a first step in which on the screwing head (15) a first hollow (21, 221) of the cross-shaped notch (20) is made, by means of a tool (23) of mechanical working through removal of material, and in which the relative movement by which the screw (10) and the tool (23) are brought together and the screw (10) is worked takes place in a direction substantially parallel to a median longitudinal axis (X) thereof; a second step in which the screw (10) for spectacles is kept in the same position and rotated by about 90° around a median longitudinal axis (X) thereof, relative to the tool (23); and a third step in which, by means of the tool (23), on the screwing head (15), a second hollow (22, 122, 222) of the cross-shaped notch (20) is made, substantially perpendicular with respect to the first hollow (21, 221).

## Description

### FIELD OF THE INVENTION

The present invention concerns a method for making a screw for spectacles, and the screw for spectacles made using said method. In particular, the present invention concerns a method for making a screw with a head having a cross-shaped notch, considerably limited in size, for example with a length and diameter in the order of some millimeters, used in the field of the production of spectacles, for example to define the hinging of a temple to a lug of a frame for spectacles, in order to close a rim-closing block, to fix a pad to a bridge, or to assemble other components of the frame.

### BACKGROUND OF THE INVENTION

Screws used in the field of the production of spectacles are known, for hinging and/or fixing reciprocally to each other different components of a frame for spectacles, such as for example temples, lugs, rim-closing blocks, pads, bridges and other.

Known screws for spectacles are characterized by being extremely small, that is, they normally have a threaded stem or shank with a diameter comprised between about 1.00 millimeter and about 1.60 millimeters, and a screwing head having a diameter comprised between about 1.40 millimeters and about 2.60 millimeters. The screwing head of known screws normally has a cross-shaped notch to define an efficient seating for a screwdriver or other tool to engage.

It is known to make these screws completely by means of a molding method through the plastic deformation of material, such as for example a rolling method, heading, punching or other, that is, by making both the threaded shank and also the head of the screw by means of suitable molds which define precisely both the threading for the shank, and also the cross-shaped notch for the head.

Some types of known screws, used in the field of the production of spectacles, are shown and described, for example, in the European patent application EP-A-0 456 381, in the French patent application FR-A-2 789 185, in the article "GKN to replace Phillips head screw" taken from METALWORKING PRODUCTION, vol. 108, no. 1, 8 January 1964, page 16, and in the French patent application FR-A-2 796 731.

However, due to the limited size of the screws used in the field of the production of spectacles, this type of known screws with a cross-shaped head obtained by molding have a limited accuracy in size and function.

Moreover, it is not possible to produce by molding screws with variable or complex geometry and sizes; for example there are constructional limits with regard to screws having a stem with different variations in diameter.

Another disadvantage of making them by molding is that, in the case of screws with a high length/diameter ratio, accidental bendings can occur of the stems during the heading steps, that is, the punching of the cross-shaped notch in the head.

Screws are also known, from the US patents US-A-2,289,561 and US-A-3,036,317 and from the German patent application DE-A-25 50 379, in which the notches on the screwing head are made at least partly by mechanical working, in particular by milling.

In all these solutions, the cross-shaped notch is made by means of a milling tool that moves in a direction substantially perpendicular to a median longitudinal axis of the screw, so as to define hollows with a flat, linear bottom, that is, each hollow has the same depth along the whole of its extension.

These known solutions are particularly complex and cumbersome, especially with regard to the movement of the milling tool.

In fact, apart from the movement transverse to the axis of the screw in order to make the hollow, the tool also has to include a lifting, a recovery travel in the opposite direction to the working direction, and a repositioning at working height.

Furthermore, in screws with a cross-shaped head, the flat and linear conformation of the hollows needs further axial workings of plastic deformation in the intersection of the hollows. The plastic deformation defines a conical cavity, able to allow an efficient housing of a traditional screwing tool. An example of this solution is known from the US patent US-A-2, 289,561.

A method is also known, from the Japanese patent application JP-A-57041109, to make the cross-shaped hollow of a screw in which the screws to be cut are housed peripherally on a rotary drum and moved from this between two different cutting stations.

In particular, the two cutting stations are reciprocally disposed to each other and with respect to the rotary drum, so that a first station carries out a first mechanical working in order to define a first notch, and the second station carries out a second working to define a second notch, substantially orthogonal to the first. In this solution, the rotation of the rotary drum between the two stations positions the screw, in the second station, rotated with respect to the first station.

This known solution also has relatively high costs, especially due to the coordination management of the two stations and the rotary drum, and also due to the need to provide, substantially doubled, the cutting tools and the relative tool-carrier equipment.

One purpose of the present invention is to perfect a method that allows to make a screw for spectacles with a head with a cross-shaped notch in a simple and rapid manner and at limited cost, guaranteeing optimum quality and functionality of the screw made.

Another purpose of the present invention is to perfect a method that allows to make a screw for spectacles with a head with a cross-shaped notch which has maximum functional quality and maximum flexibility of construction.

Another purpose is to perfect a method that allows to make a screw able to be screwed in with traditional screwing tools with a cross shaped head.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purpose, a method according to the present invention is applied for making a screw for spectacles, made of metal material, which has a threaded stem and a head provided with a cross-shaped notch defining the seating for a screwing tool to engage.

The method according to the invention comprises making the cross-shaped notch on the head of the screw by means of a mechanical working with removal of material, for example by milling.

According to a characteristic feature of the present invention, the method comprises at least the following steps:
- a first step in which a first hollow of the cross-shaped notch is made on the head of the screw, by means of a mechanical working tool through removal of material, for example a milling cutter, and in which the relative movement by which the screw and the tool are brought together, and the screw worked, takes place in a direction substantially parallel to a median longitudinal axis of the screw;
- a second step in which the screw is kept in the same position and rotated by about 90° with respect to the work tool, around a median longitudinal axis X passing through the center of said head; and
- a third step in which a second hollow of the cross-shaped notch is made on the head by means of the same mechanical working tool through removal of material, the second hollow being disposed substantially perpendicular with respect to the first hollow.

In this way, at least the head of the screw is completely made and finished with a single tool, without providing any mold or complex molding steps, and without needing any complex members to move the screw in order to make the first and the second hollow.

With the present invention it is thus possible to achieve great precision, without further finishing processes.

Moreover, thanks to the fact that the cross-shaped notch is made by means of mechanical working, made in a direction substantially parallel to the median longitudinal axis X, it is also possible to vary, on each occasion, the parameters for making the screw, for example the shape and size of the surface notch, or other.

Furthermore, since the tool has a circular conformation, the working in a direction substantially parallel to the axis X defines hollows with a variable depth along their extension. In particular, each hollow made according to the present invention has a deeper segment in a central zone where the hollows intersect, and a less deep segment in the external zones.

In this way, the cross-shaped notch made according to the invention is suitable to be used with a traditional screwing tool, without providing further workings to make the notches through removal of material.

According to a variant, in the third step too, the relative movement by which the screw and the tool are brought together, and the screw worked, takes place in a direction substantially parallel to a median longitudinal axis X.

According to another variant, the tool remains fixed and the screw not only rotates by about 90°, but also moves with respect to the tool along said direction substantially parallel to the median longitudinal axis of the screw.

Advantageously, the threaded stem of the screw is also made by means of mechanical working through removal of material, for example by turning.

In this way, the costs and times of making the screw for spectacles are further reduced, and it is also possible to personalize, on each occasion, the type or the diameter of the thread.

### BRIEF DESCRIPTION OF THE DRAWINGS

These and other characteristics of the present invention will become apparent from the following description of some preferential forms of embodiment, given as a non-restrictive example with reference to the attached drawings wherein:
- fig. 1a is a lateral view of a screw for spectacles made using the method according to the present invention, applied to two components of a frame for spectacles;
- fig. Ibis a plane view of a screw for spectacles made using the method according to the present invention, applied to two components of a frame for spectacles;
- fig. 2 is a three-dimensional view of the screw in fig. 1;
- figs. 3a to 3d show schematically and in sequence some steps of making the screw in fig. 1;
- fig. 4 shows a first variant of the screw in fig. 1;
- fig. 5 shows a step in the making of the screw in fig. 4;
- fig. 6 shows a second variant of the screw in fig. 1;
- fig. 7 shows a step in the making of the screw in fig. 6;
- fig. 8 shows a third variant of the screw in fig. 1;
- fig. 9 shows a fourth variant of the screw in fig. 1.

### DETAILED DESCRIPTION OF SOME PREFERENTIAL FORMS OF EMBODIMENT

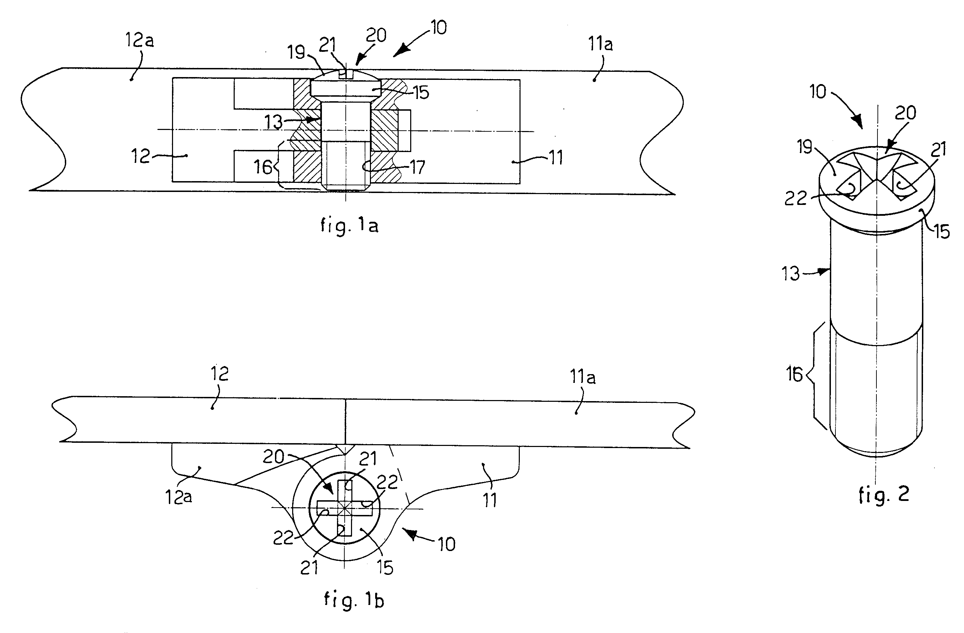

With reference to figs. 1a and 1b, a screw 10 for spectacles is shown, for example of the type able to connect in articulated manner two hinge elements 11 and 12, the first mounted on a temple 11a and the second on a lug 12a of a frame, to determine the reciprocal hinging thereof.

The screw 10 comprises, in a substantially traditional manner, a stem or shank 13 and a screwing head 15, made of metal material.

The stem 13, in this case, has a diameter equal to about 1 mm and a length equal to about 4 mm, and comprises at least a threaded segment 16, able to be screwed into a mating female thread 17 made on the hinge element 11, or directly on the temple 11a, on the lug 12a or on other corresponding components of the frame.

The screwing head 15 is disposed coaxial with the stem 13, has a diameter slightly greater than the latter, that is, equal to about 2 mm, and has an external surface 19, on which a cross-shaped notch 20 is made, generally formed by two hollows 21 and 22 intersecting with each other at about 90°.

The notch 20 thus defines a seating to house the point of a traditional screwdriver, to allow the efficient screwing of the screw 10.

In the forms of embodiment shown in figs. 1 to 7, both the hollows 21 and 22 are blind, that is, their lateral extension is comprised in the bulk of the screwing head 15, and hence they are closed at the sides.

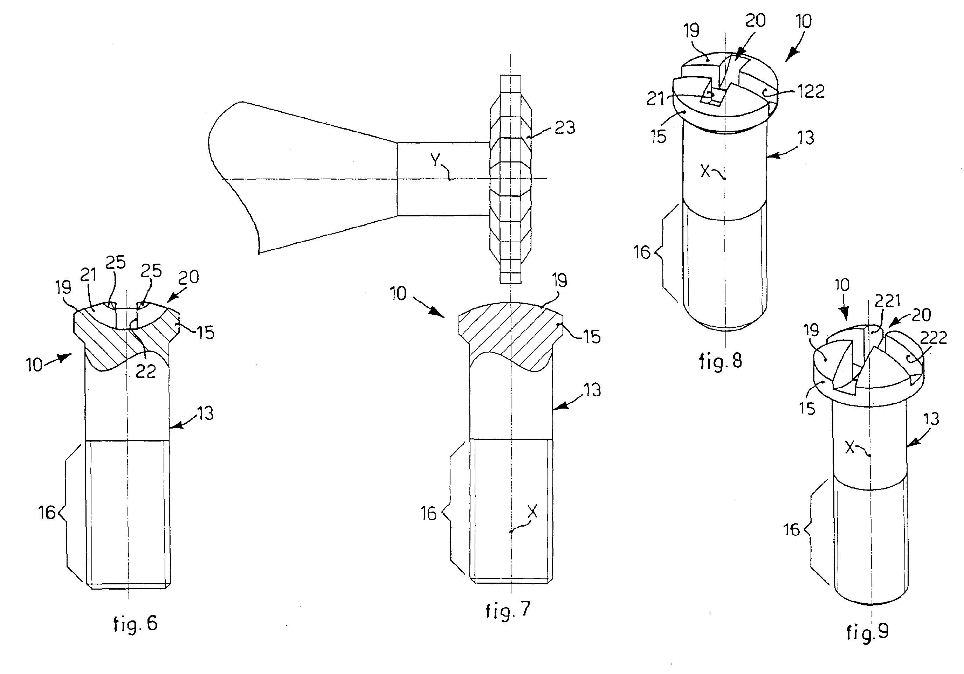

In the variant shown in fig. 8, on the contrary, the hollow indicated by the reference number 122 is made through, that is, its lateral extension exceeds the bulk of the screwing head 15 and therefore is open laterally. This solution allows to screw the screw 10 according to the invention both with a common traditional screwdriver and also with a cross-tip or Phillips® screwdriver.

In the variant shown in fig. 9, both the hollows indicated by 221 and 222 are made through and exceed laterally the bulk of the screwing head 15 of the screw 10.

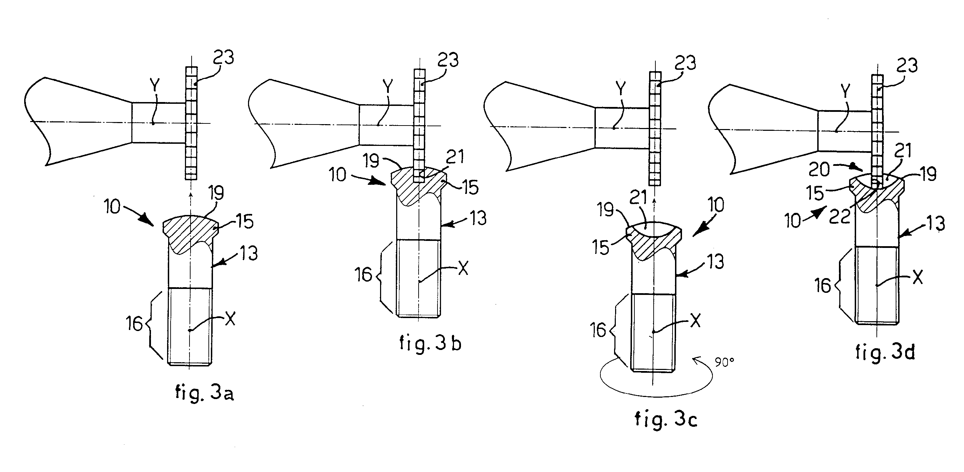

As shown in the operating sequence in figs. 3a to 3d, the method to make the screw 10 according to the invention is performed by mechanical working through removal of material.

The stem 13 and the screwing head 15 are first made by turning, starting from a cylinder of metal material, for example a metal wire. This mechanical working of turning also provides to make the threaded segment 16.

On the contrary, the notch 20 is made by a mechanical working of milling, by means of a suitable circular milling cutter 23 having a thickness substantially correlated to the width of the hollows 21 and 22 to be made, in this case about 0.4 mm.

In the step shown in fig. 3a, the screw 10 is positioned below the milling cutter 23 with a median longitudinal axis X substantially perpendicular to an axis of rotation Y of the milling cutter 23.

In this case, the relative direction in which the screw 10 and the milling cutter 23 are brought together, and the screw 10 is worked, is substantially parallel to the longitudinal axis X of the screw 10, thus allowing the milling cutter 23 to make the first hollow 21 (fig. 3b). More particularly, by making the milling cutter 23 work in this way, and since it has a circular conformation, a hollow 21 is created with a variable depth, that is, with a central segment deeper than the lateral segments. The profile of the hollow 21 thus made is totally similar to that of an analogous hollow obtained by molding.

The relative movement of the screw 10 and of the milling cutter 23 in a direction substantially parallel to the axis X continues until the hollow 21 reaches, in its central segment, a determinate depth, corresponding to about that of a traditional molded screw with a cross-shaped notch.

Once the first hollow 21 has been completed, the screw 10 and the milling cutter 23 are relatively distanced, again in the direction of the longitudinal axis X. Subsequently, the screw 10 is kept in its position with respect to the milling cutter 23 and is rotated by about 90° around the same longitudinal axis X (fig. 3c).

In the same way as in the steps illustrated in figs. 3a and 3b, the screw 10 and the milling cutter 23 are again brought near to each other, so that the latter makes the second hollow 22, substantially perpendicular to the first hollow 21.

In this case too, the entity of the relative movement of the screw 10 towards the milling cutter 23 is such as to define the depth of the second hollow 22.

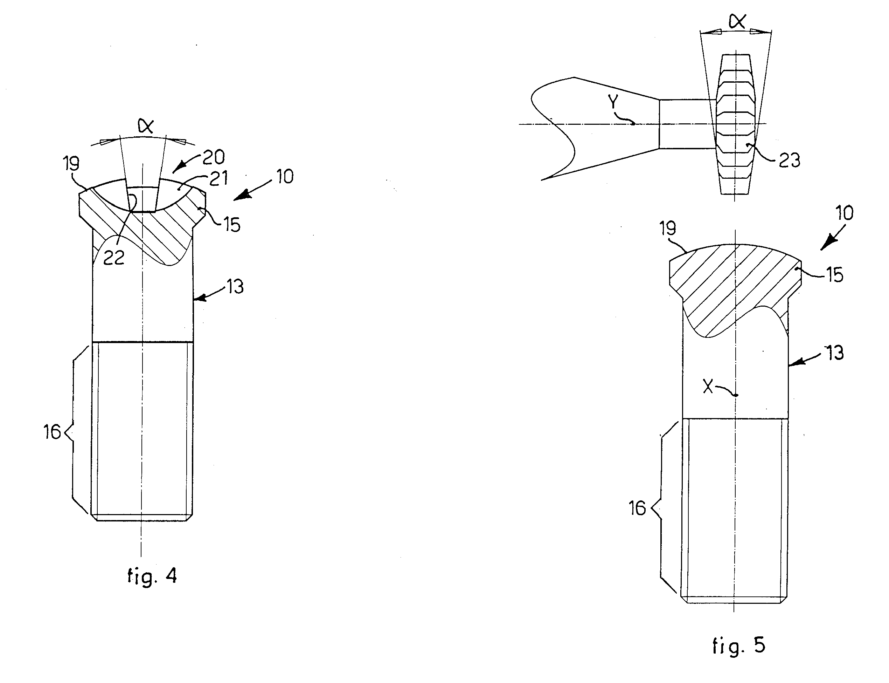

In the variant shown in figs. 4 and 5, each hollow 21 and 22 provides, apart from a depth corresponding to that of the embodiment shown in figs. 1a, 1b, 2 and 3a-3d, a lead-in angle α for a traditional screwdriver. The lead-in angle α is about 10°-20°, advantageously about 15°.

In this form of embodiment, the milling cutter 23 is shaped corresponding to the lead-in angle α to be made for each notch 21, 22.

In the variant shown in figs. 6 and 7, near the relative intersection edges between the hollows 21 and 22 relative positioning bevels 25 for a traditional screwdriver are provided.

The relative milling cutter 23 has a cutting profile correlated to that of the bevels 25.

With this solution the centering of the screwing tool inside the cross-shaped notch is simplified, which is very advantageous in the case of automatic screwing machines.

To make the screw 10 according to the variant in fig. 8, the first hollow 21 is made in the manner described previously for the embodiments shown in figs. 1a, 1b, 2, 3a-3d, 4, 5, 6 and 7, whereas the second hollow 122, unlike what is shown in fig. 3d, is made through, that is, here the working direction of the tool with respect to the piece is perpendicular to the longitudinal axis X of the screw 10.

In the variant shown in fig. 9, both the first hollow 221 and the second hollow 222 are made by bringing the screw 10 and the milling cutter 23 relatively nearer each other, in a direction substantially parallel to the axis X.

In this variant, the through conformation of both the hollows 221 and 222 can be obtained by increasing the entity of proximity with respect to that provided in the embodiment in fig. 1 or, advantageously, using a milling cutter with a greater diameter, thus using stronger tools.

It is clear, however, that modifications and/or additions of parts or steps may be made to the screw 10 and the method as described heretofore, without departing from the field and scope of the present invention.

It also comes within the field of the present invention to provide that the notch 16 can be made with personalizable shape and size different from the standard ones, and shown in the attached drawings.

It also comes within the field of the present invention that the screwing head 15, while it always has a cross-shaped notch 20, can have a geometry of the head that is different from the rounded head 19 shown in the drawings.

It is also clear that, although the present invention has been described with reference to specific examples, a person of skill in the art shall certainly be able to achieve many other equivalent forms of method for making a screw for spectacles, and screw for spectacles thus made, having the characteristics as set forth in the claims and hence all coming within the field of protection defined thereby.

## Claims

1. Method for making a screw for spectacles, made of metal material, having a stem (13) provided with at least a threaded segment (16), and a screwing head (15) provided with a cross-shaped notch (20) defining the seating for a screwing tool to engage, wherein said method comprises making at least said cross-shaped notch (20) by means of mechanical working through removal of material, **characterized in that** it comprises at least the following steps:
- a first step in which on said screwing head (15) a first hollow (21, 221) of said cross-shaped notch (20) is made, by means of a tool (23) of mechanical working through removal of material, and in which the relative movement by which said screw (10) and said tool (23) are brought together and said screw (10) worked takes place in a direction substantially parallel to a median longitudinal axis (X) thereof;
- a second step in which said screw (10) for spectacles is kept in the same position and rotated by about 90° around a median longitudinal axis (X) thereof, relative to said tool (23); and
- a third step in which, by means of said tool (23), on said screwing head (15), a second hollow (22, 122, 222) of said cross-shaped notch (20) is made, substantially perpendicular with respect to said first hollow (21, 221).

2. Method as in claim 1, **characterized in that** also in said third step, the movement by which said screw (10) and said tool (23) are brought together and said screw (10) is worked takes place in a direction substantially parallel to said median longitudinal axis (X).

3. Method as in claim 2, wherein said tool (23) has its own axis of rotation (Y), **characterized in that** said screw (10) is positioned with its median longitudinal axis (X) substantially perpendicular to said axis of rotation (Y) of said tool (23).

4. Method as in any claim hereinbefore, **characterized in that** at least in said first step said screw (10) moves towards said tool (23) along said direction substantially parallel to its median longitudinal axis (X), in order to make said first hollow (21,221).

5. Method as in any claim hereinbefore, **characterized in that** each of said hollows (21, 22) comprises a lead-in angle (α) comprised between about 10° and about 20°.

6. Method as in any claim hereinbefore, **characterized in that** each of said hollows (21, 121, 22) comprises, in proximity with an intersection edge with an adjacent hollow (21, 121, 22), a positioning bevel (25) for said screwing tool.

7. Method as in any claim hereinbefore, **characterized in that** at least one of the two hollows (122, 221, 222) is made laterally through with respect to said screwing head (15).

8. Method as in any claim hereinbefore, **characterized in that** said stem (13) and said threaded segment (16) are also made by means of mechanical working through removal of material.

9. Method as in any claim hereinbefore, **characterized in that** said mechanical working through removal of material comprises at least a milling or turning operation.

10. Screw for spectacles made of metal material and having a stem (13) provided with at least a threaded segment (16), and a screwing head (15) provided with a cross-shaped notch (20) defining the seating for a screwing tool to engage, and made by means of mechanical working through removal of material, **characterized in that** said notch (20) comprises at least a first hollow (21, 221) made by means of a tool (23) of mechanical working through removal of material, and having a variable depth along its extension, and a second hollow (22, 122, 222) made by means of said tool (23) of mechanical working through removal of material, and made in sequence to said first hollow (21, 221) after said screw (10), remaining in the same position, rotates by about 90° around a median longitudinal axis (X) thereof, relative to said tool (23).

11. Screw for spectacles as in claim 10, **characterized in that** said second hollow (22, 122, 222) has a variable depth along its extension.

12. Screw for spectacles as in claim 10 or 11, **characterized in that** said stem (13) and said threaded segment (16) are also made by means of mechanical working through removal of material.
